**Europäisches Patentamt**

**European Patent Office**

**Office européen des brevets**

(19)

(11) Veröffentlichungsnummer: **0 313 751 B1**

# (12) EUROPÄISCHE PATENTSCHRIFT

(45) Veröffentlichungstag der Patentschrift:
22.11.90

(51) Int. Cl.⁵: **F02M 55/00**

(21) Anmeldenummer: **88113481.1**

(22) Anmeldetag: **19.08.88**

(54) **Abdichtende Durchführung einer Rohrleitung.**

(30) Priorität: **30.10.87 DE 3736778**

(43) Veröffentlichungstag der Anmeldung:
**03.05.89 Patentblatt 89/18**

(45) Bekanntmachung des Hinweises auf die Patenterteilung:
**22.11.90 Patentblatt 90/47**

(84) Benannte Vertragsstaaten:
**ES FR GB IT**

(56) Entgegenhaltungen:
**AT-B- 372 162**
**DE-A- 2 452 854**
**DE-A- 2 513 394**
**DE-A- 3 524 278**
**DE-C- 958 671**
**US-A- 2 534 690**

(73) Patentinhaber: **DAIMLER-BENZ**
**AKTIENGESELLSCHAFT, Mercedesstrasse 136,**
**D-7000 Stuttgart 60(DE)**

(72) Erfinder: **Bonfert, Helmut, Tiergartenstrasse 29B,**
**D-7030 Böblingen(DE)**
Erfinder: **Hardt, Thomas, Vogelsangstrasse 7,**
**D-7302 Ostfildern 2(DE)**
Erfinder: **Klumpp, Rolf, Dr., Lindenstrasse 33/1,**
**D-7053 Kernen(DE)**
Erfinder: **Wagner, Wolf-Dietrich, Lebretstrasse 5,**
**D-7000 Stuttgart 60(DE)**

ACTORUM AG

## Beschreibung

Die Erfindung betrifft eine abdichtende Durchführung einer Rohrleitung mit den Merkmalen des Oberbegriffes von Patentanspruch 1.

Eine Leitungsdurchführung dieser Art ist aus der AT-B 372 162 bekannt. Bei dieser Konstruktion ist die zum Hindurchführen einer Kraftstoffleitung im Gehäuse vorgesehene Wandöffnung als zylindrische Bohrung ausgebildet. Diese ist von einer das innerhalb des Gehäuses beispielsweise an einem Pumpen-Düsenaggregat einer Einspritz-Brennkraftmaschine anzuschließende Endstück der Kraftstoffleitung aufnehmenden Überwurfschraube durchsetzt, die das konische Endteil der Kraftstoffleitung mit einem konischen Sitz eines Anschlußstückes des Pumpen-Düsenaggregates in Eingriff hält.

Als Abdichtkörper zum abgedichteten Verschließen des hauptsächlich mit Schmiermittelnebel durchsetzten Gehäuseraumes an der Wandöffnung dient ein in diese abdichtend eingesetzter und die Überwurfschraube abdichtend umschließender Dichtbalg.

Diese Art der Leitungsdurchführung zwingt dazu, das Gehäuse mit einem abnehmbaren Deckel auszustatten, um im Bedarfsfalle einen schnellen Zugriff zu im Gehäuseinnern untergebrachten Komponenten, wie Nockenwelle, deren Lager oder Kipphebel, zu schaffen, da andernfalls die üblicherweise in einer Vielzahl vorgesehenen Kraftstoffleitungen demontiert werden müßten, um das Gehäuse vom Zylinderkopf abnehmen zu können.

Des weiteren erlaubt diese Konstruktion den Anschluß sämtlicher Kraftstoffleitungen an die einzelnen Pumpen-Düsenaggragate erst nach erfolgtem Aufsetzen des Gehäuses auf dem Zylinderkopf. Schließlich gestaltet sich die Montage des in der Wandöffnung abdichtend zu befestigenden Balges umständlich und zeitraubend.

Der Erfindung liegt deshalb die Aufgabe zugrunde, eine abdichtende Leitungsdurchführung anzugeben, die eine einteilige Gehäuseausbildung, die Demontage des Gehäuses ohne Abbau der Rohrleitung, einen aggregateseitigen Anschluß derselben vor der Gehäusemontage und eine einfach zu bewerkstelligende Anordnung des Abdichtkörpers in der Wandöffnung ohne zusätzliche Maßnahmen zur Rohrabdichtung an der Durchdringungsstelle des Abdichtkörpers ermöglicht.

Ausgehend von einer im Oberbegriff des Patentanspruches 1 erläuterten Leitungsdurchführung wird diese Aufgabe durch die kennzeichnenden Merkmale dieses Patentanspruches gelöst.

Bei der erfindungsgemäßen Konstruktion ist am Gehäuse randseitig zur Aufnahme eines zweiteiligen Abdichtkörpers eine randoffene Wandöffnung vorgesehen, wobei das eine Teilstück des Abdichtkörpers auf der Aufnahmefläche der Brennkraftmaschine und dessen anderes Teilstück in der Wandöffnung angeordnet sind. Damit ist es möglich, bereits vor der Gehäusemontage die Rohrleitung in einem vom Gehäuse umschlossenen Raum anzuschließen. Bei der Gehäusemontage kommt dann sowohl die bereits montierte Rohrleitung als auch das an der Brennkraftmaschine vorgesehene Teilstück des Abdichtkörpers mit der randoffenen Wandöffnung in Eingriff, wobei die Wandöffnung dicht verschlossen und dabei zugleich die Rohrleitung zwischen beiden Abdichtkörper-Teilstücken abdichtend eingeklemmt wird. Zum Zwecke der Demontage ist das Gehäuse lediglich von der Brennkraftmaschine zu lösen und abzuheben, wobei zwangsläufig zugleich die Abdichtung der Wandöffnung wieder aufgehoben wird.

Weitere Merkmale und Einzelheiten der Erfindung sind Gegenstand von Unteransprüchen.

Neben der Leitungsdurchführung nach der AT-B 372 162, von der die Erfindung ausgeht, ist aus der DE-A 35 24 278 bereits eine Leitungsdurchführung bekannt, die einen Abdichtkörper für wenigstens eine Rohrleitung aufweist, der in eine Wandöffnung einschiebbar ist und die betreffende Rohrleitung umschließt. Hierbei ist jedoch der Abdichtkörper als Ganzes in der Wandöffnung verrastet und über seine Länge zum Einbringen der Rohrleitung geschlitzt. Ein dichter Gehäuseverschluß ist damit nicht gegeben.

Die US-A 2 534 690 hat in Figur 7 eine Leitungsdurchführung zum Gegenstand, bei der in eine randoffene Wandausnehmung bereits zwei abdichtend aneinanderliegende Teilstücke eines Abdichtkörpers eingeschoben sind.

Hierbei nimmt jedoch jedes Teilstück eine Rohrleitung auf, wozu sie geschlitzt sind und zum anderen sind beide Abdichtkörper-Teilstücke mittels einer Haltespange in der Wandausnehmung im Abstand von deren randoffenen Seite gehalten. Damit ist einerseits die Wandöffnung nicht dicht verschlossen und andererseits bei einer Gehäuseverlagerung in Längsrichtung der Wandausnehmung kein sich selbsttätig teilender Abdichtkörper gegeben.

Schließlich offenbart die DE-C 958 671 eine dichte Durchführung für Leitungsbündel, die je Leitung einen zweiteiligen Abdichtkörper aufweist, deren Teilstücke unter Druck aneinander anlegbar sind und dabei die betreffende Leitung abdichtend umschließen.

Diese Konstruktion schafft zwar einen abgedichteten Leitungsdurchgang durch eine Gehäusewand; jedoch sind hierzu ein oder mehrere, zweigeteilte Abdichtkörper in einem Spannrahmen anzuordnen, der seinerseits wiederum in eine randgeschlossene Wandausnehmung einzusetzen ist. Damit ist eine Gehäusedemontage ohne vorheriges Entfernen der Leitung bzw. Leitungen nicht möglich.

In der Zeichnung ist ein Ausführungsbeispiel der Erfindung dargestellt. Es zeigen:

Figur 1 eine Vorderansicht auf das eine erfindungsgemäße Leitungsdurchführung aufweisende Endstück eines auf eine Brennkraftmaschine montierbaren, eine Abdichthaube bildenden Gehäuses,

Figur 2 einen Längsschnitt entlang der Linie II - II der Figur 1 durch die Leitungsdurchführung,

Figur 3 einen Querschnitt durch die Leitungsdurchführung, entlang der Linie III - III der Figur 1,

Figur 4 eine Vorderansicht des verkürzt dargestellten Gehäuses in einer von der Brennkraftmaschine abgehobenen Stellung, und

Figur 5 eine schaubildliche Darstellung einer rahmenförmigen Dichtung für das Gehäuse, an der für den Eingriff in dessen Wandöffnungen bestimmte Abdichtkörper angeformt sind.

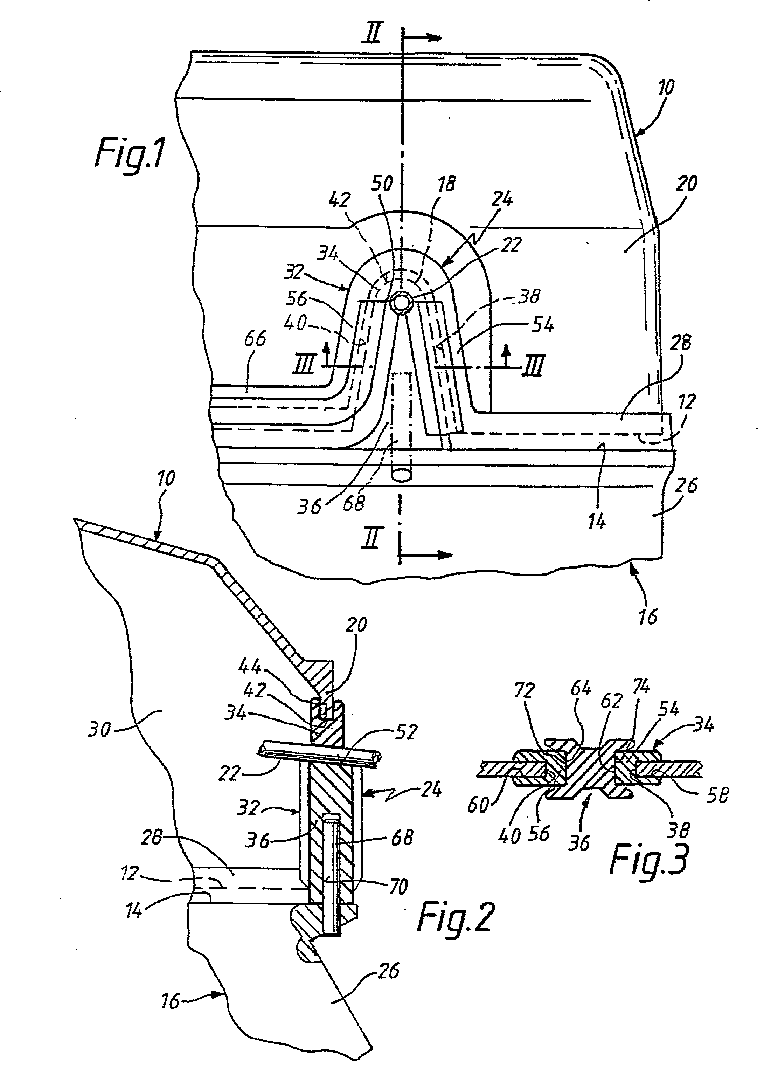

In Figur 1 und 2 bezeichnet 10 ein eine Abdeckhaube bildendes, einteiliges Gehäuse, dessen die untere offene Gehäuseseite begrenzender Gehäuserand 12 auf einer ebenen Aufnahmefläche 14 einer Brennkraftmaschine 16 abgedichtet aufruht.

Wie die Figuren 1 und 2 zeigen, bezeichnet 18 eine Wandöffnung, die sich, ausgehend vom unteren Gehäuserand 12 in eine Gehäuseseitenwand 20 hineinerstreckt. Durch diese Wandöffnung 18 ist eine Rohrleitung 22 mittels einer als Ganzes mit 24 bezeichneten und in die Wandöffnung 18 eingesetzten Leitungsdurchführung durch die letztere abgedichtet hindurchgeführt.

Beim vorliegenden Ausführungsbeispiel bildet das Gehäuse 10 beispielsweise die Zylinderkopfhaube eines mit 26 bezeichneten Zylinderkopfes der Brennkraftmaschine 16, wobei die Rohrleitung 22 eine von mehreren Kraftstoffleitungen bildet, die innerhalb der Zylinderkopfhaube 10 beispielsweise an jeweils ein Pumpen-Düsenaggregat der Brennkraftmaschine 16 angeschlossen sind. Sämtliche Kraftstoffleitungen 22 sind dabei jeweils mittels einer abdichtenden Leitungsdurchführung 24 durch die jeweilige Wandöffnung 18 hindurchgeführt.

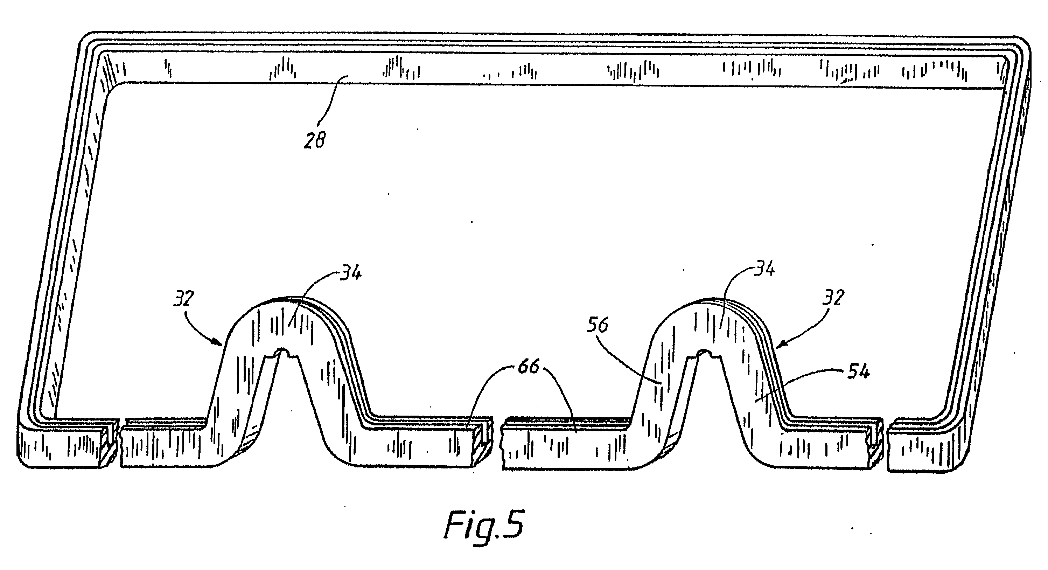

Die einzelnen Leitungsdurchführungen 24 sind konstruktiv gleich ausgebildet und sind vorzugsweise zugleich in ein, gemäß Figur 5 rahmenförmiges Abdichtprofil 28 integriert, das den Gehäuserand 12 übergreift und eine zwischen der Zylinderkopfhaube 10 und der Aufnahmefläche 14 vorhandene Dichtung bildet, um deren mit Schmiernebel beaufschlagten Haubeninnenraum 30 abzudichten.

Die Leitungsdurchführungen 24 weisen jeweils einen zweiteilig ausgebildeten, als Ganzes mit 32 bezeichneten Abdichtkörper aus elastomerem Material, vorzugsweise Gummi auf, dessen eines Teilstück 34 in die Wandöffnung 18 eingesetzt ist und dessen anderes Teilstück 36 aufrecht auf der Aufnahmefläche 14 des Zylinderkopfes 26 gehalten ist.

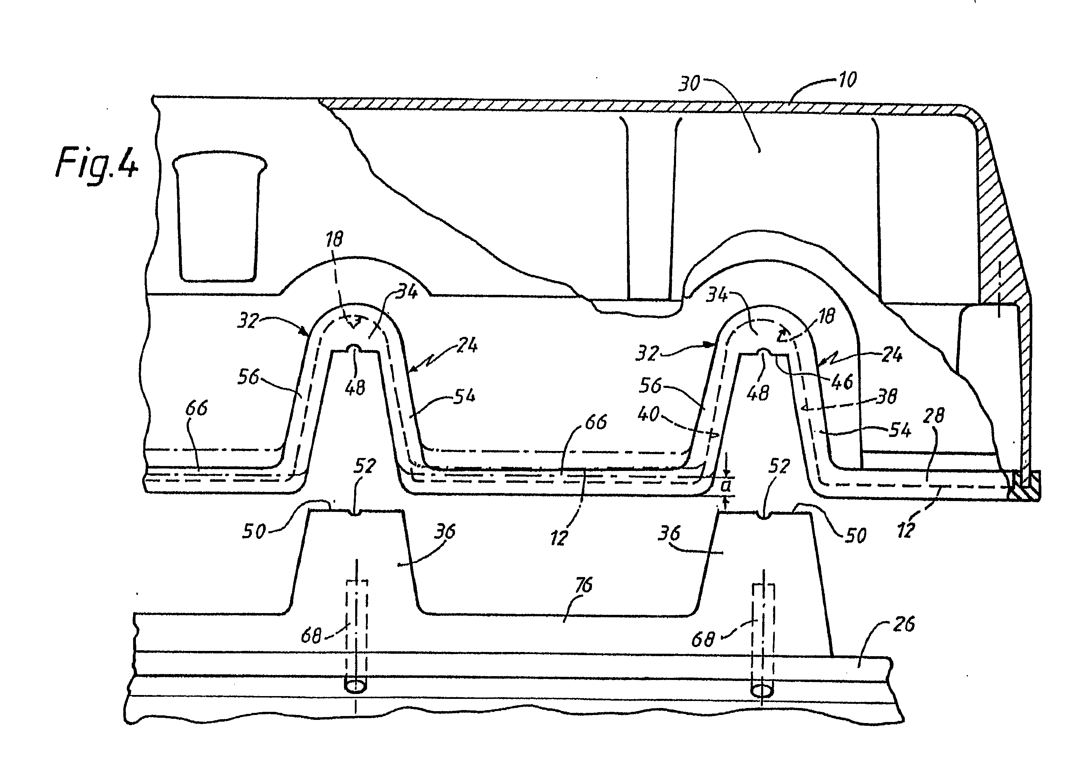

Wie aus den Figuren 1 und 4 zu ersehen ist, sind die Wandöffnungen 18 jeweils von zwei gerade verlaufenden, vorzugsweise in einer zum Gehäuserand 12 entgegengesetzten Richtung konvergierenden Seitenkanten 38, 40 begrenzt, die beide in einen gemeinsamen inneren, vorzugsweise kreisbogenförmigen Kantenteil 42 übergehen. Dieser, sich nach oben innen verjüngenden Kontur der Wandöffnungen 18 sind die beiden Teilstücke 34, 36 des Abdichtkörpers 32 angepaßt, wobei das haubenseitige Teilstück 34 mit einer Außennut 44 (siehe Figur 2) den kreisbogenförmigen Kantenteil 42 übergreift.

Dieses halbkreisförmige Abdichtkörper-Teilstück 34 weist eine zur Aufnahmefläche 14 des Zylinderkopfes 26 parallele Abstützkante 46 auf, die in der Mitte vorzugsweise mit einer Vertiefung 48 ausgestattet ist, die einen Teil der abzudichtenden Rohrleitung 22, diese abdichtend umschließend, aufnimmt.

Die Konstruktion könnte nun so getroffen sein, daß das Abdichtkörper-Teilstück 34 in der Ebene seiner Abstützkante 46 endet und das andere Abdichtkörper-Teilstück 36 mit jeweils einer in dessen Längskanten eingeformten Nut die Seitenkanten 38, 40 übergreift. Dabei könnte es sich, entsprechend der Ausbildung der betreffenden Wandöffnung 18, nach oben keilförmig verjüngend, mit einer oberen Abstützkante 50 abdichtend an der Abstützkante 46 des Teilstückes 34 abstützen und dabei, analog zum letzteren gleichfalls eine halbrunde, die Rohrleitung 22 abdichtend umschließende Vertiefung 52 aufweisen.

Bevorzugt sind jedoch an das Abdichtkörper-Teilstück 34 je Seitenkante 38, 40 der Wandöffnung 18 Abdichtschenkel 54 und 56 angeformt, die mit je einer Längsnut 58 bzw. 60 auf die Seitenkanten 38, 40 abdichtend aufgesteckt sind. Sie weisen an ihren einander gegenüberliegenden Längsseiten jeweils eine ebene Anlagefläche 62 bzw. 64 auf.

Wie aus Figur 4 ersichtlich ist, sind die einander gegenüberliegenden Seitenschenkel 54, 56 zweier einander benachbarter Wandöffnungen 18 über einen an diese angeformten Verbindungssteg 66 miteinander verbunden, der seinerseits, analog zum Abdichtprofil 28 den Rand 12 der Zylinderkopfhaube 10 umgreift und gleichfalls ein Abdichtprofil bildet.

Die auf der Aufnahmefläche 14 aufrecht stehend angeordneten Abdichtkörper-Teilstücke 36 können auf letztere einzeln, vorzugsweise durch Aufstecken befestigt sein, was beispielsweise mittels eines in der Aufnahmefläche 14 aufrecht angeordneten Montagestiftes 68 erfolgen kann, dem im Abdichtkörper-Teilstück 36 eine aus dessen Unterseite ausmündende Einstecköffnung 70 zugeordnet sein kann.

Wie Figur 3 zeigt, sind diese Abdichtkörper-Teilstücke 36 an ihren Längskanten mit jeweils einer Eingriffsnut 72 bzw. 74 ausgestattet, mit denen die Abdichtschenkel 54 und 56 des Abdichtkörper-Teilstückes 34 formschlüssig in Eingriff sind. Dadurch kommt ein absolut dichter Gehäuseverschluß im Bereich der Leitungsdurchführung zustande, sobald die durch die Abdichtschenkel 54, 56 seitlich begrenzten Wandöffnungen 18 mit den Abdichtkörper-Teilstücken 36 in Eingriff gebracht werden (siehe Figuren 1 und 2).

Wie Figur 5 zeigt, bilden die Abdichtkörper 32 in Verbindung mit dem Verbindungssteg 66 und dem an deren außenliegenden Abdichtschenkel 54 bzw. 56 angeformten Abdichtprofil 28 eine in sich geschlossene, z.B. rahmenförmige Dichtung, die auf den Rand 12 der Zylinderkopfhaube 10 aufsteckbar ist.

Wie aus Figur 4 ersichtlich ist, kann eine bevorzugte Ausführungsform der Erfindung auch darin bestehen, die auf dem Zylinderkopf 26 aufrecht stehend anzuordnenden Abdichtkörper-Teilstücke 36 über eine Verbindungsleiste 76 miteinander zu verbinden. Damit bilden die üblicherweise für eine vier- oder sechsfache Anordnung von Wandausnehmungen 18 an Zylinderkopfhauben 10 vorgesehenen Abdichtkörper-Teilstücke 36 ein einstückiges Bauteil, das sich auf dem Zylinderkopf 26 entsprechend schnell montieren läßt. Hierbei wird man die Verbindungsleiste 76 vorzugsweise derart ausbilden, daß der haubenseitige Verbindungssteg 66 mit diesem ebenso abdichtend in Eingriff kommt, wie die Abdichtschenkel 54 56 mit dem Abdichtkörper-Teilstück 36. In diesem Falle ist aber, wie in Figur 4 an der Zylinderkopfhaube 10 strichpunktiert angedeutet ist, der zwischen den Wandöffnungen 18 vorhandene Abschnitt des Gehäuserandes 12 und somit auch der Verbindungssteg 66 um einen solchen Betrag a zurückzuversetzen, daß die Verbindungsleiste 76 entlang dieses Randabschnittes die Abdichtung der Zylinderkopfhaube 10 übernehmen kann.

Selbstverständlich können die Abdichtschenkel 54 und 56 auch eine Längsnut aufweisen, in welche die Längskanten des Abdichtkörper-Teilstückes 36 formschlüssig eingreifen. Dies betrifft natürlich auch den gegenseitigen Eingriff von Verbindungssteg 66 und Verbindungsleiste 76. Darüber hinaus könnte das Abdichtprofil 28 auch an die außenliegenden Längskanten der beiden äußeren Abdichtkörper-Teilstücke 36 angeformt sein.

Schließlich können zwischen den beiden Abdichtkörper-Teilstücken 34 und 36, bei entsprechender Dimensionierung in der Breite, auch mehrere Leitungen abgedichtet hindurchgeführt sein.

Die erläuterte Konstruktion einer beispielsweise in mehrfacher Anordnung an einem Gehäuse vorgesehenen Leitungsdurchführung ermöglicht eine einteilige Ausbildung der Zylinderkopfhaube 10 wobei vor deren Aufsetzen auf den Zylinderkopf 26 sämtliche Rohr- bzw. Kraftstoffleitungen innerhalb des von der Zylinderkopfhaube 10 umschlossenen Bereiches angeschlossen werden können.

Bei der Montage der Zylinderkopfhaube 10 ergibt sich dabei zwangsläufig sowohl ein gas- und flüssigkeitsdichter Verschluß sämtlicher Wandöffnungen als auch eine abgedichtete Einbettung der Rohr- bzw. Kraftstoffleitungen 22 innerhalb der Abdichtkörper 32.

Als Material für Abdichtkörper 32, Abdichtprofil 28 sowie Verbindungssteg 66 und Verbindungsleiste 76 eignet sich besonders Nitrilkautschuk (NBR), wobei das Gummimaterial für das auf den Zylinderkopf 26 aufzusteckende Abdichtkörper-Teilstück 36 im Vergleich zu dem ihm zugeordneten Abdichtkörper-Teilstück 34 vorzugsweise härter eingestellt ist.

## Patentansprüche

1. Abdichtende Durchführung einer Rohrleitung (22) durch eine Wandöffnung (18) eines mit Schmiermittel beaufschlagten Gehäuses (10), das mit einem die offene Gehäuseseite begrenzenden Gehäuserand (12) auf einer Aufnahmefläche (14) einer Brennkraftmaschine abgedichtet befestigbar ist, mit einem die Wandöffnung (18) dicht verschließenden, von der im Gehäuseinnern angeschlossenen Rohrleitung (22) durchsetzten Abdichtkörper (32) aus elastomerem Material, dadurch gekennzeichnet, daß die Wandöffnung (18) sich, ausgehend vom Gehäuserand (12), in die Gehäusewand (20) hinein erstreckt, daß der Abdichtkörper (32) zweiteilig ausgebildet, mit seinem einen Teilstück aufrecht auf der Aufnahmefläche (14) gehalten und mit der dessen anderes Teilstück (34) aufnehmenden Wandöffnung (18) lösbar in Eingriff ist und daß beide aneinander anliegenden Abdichtkörper-Teilstücke (34,36) zwischen sich die Rohrleitung (22) abdichtend umschließen.

2. Leitungsdurchführung nach Anspruch 1, dadurch gekennzeichnet, daß die Seitenkanten (38, 40) der Wandöffnung (18) in einer zum Gehäuserand (12) entgegengesetzten Richtung konvergieren und in einen kreisbogenförmigen Kantenteil (42) übergehen.

3. Leitungsdurchführung nach Anspruch 2, dadurch gekennzeichnet, daß das eine Teilstück des Abdichtkörpers mit den beiden Seitenkanten (38, 40) und das andere mit dem kreisbogenförmigen Kantenteil (42) der Wandöffnung (18) formschlüssig in Eingriff sind.

4. Leitungsdurchführung nach Anspruch 1 oder 2, dadurch gekennzeichnet, daß das in die Wandöffnung (18) eingesetzte, sich mit deren kreisbogenförmigem Kantenteil (42) in Eingriff befindende Teilstück (34) des Abdichtkörpers (32) zwei Abdichtschenkel (54, 56) aufweist, die einerseits mit jeweils einer Seitenkante (38 bzw. 40) der Wandöffnung (18) und andererseits mit jeweils einer Längsnut des anderen Teilstückes (36) des Abdichtkörpers (32) in Eingriff sind.

5. Leitungsdurchführung nach Anspruch 4, dadurch gekennzeichnet, daß zumindest ein Abdichtschenkel (56) des in die Wandöffnung (18) eingesetzten Abdichtkörper-Teilstückes (34) mit einem Abdichtschenkel (54) eines in eine benachbarte Wandöffnung (18) eingesetzten Abdichtkörper-Teilstückes (34) über einen sich mit dem die Gehäuseöffnung begrenzenden Gehäuserand (12) in Eingriff befindenden Verbindungssteg (66) verbunden ist.

6. Leitungsdurchführung nach Anspruch 5, dadurch gekennzeichnet, daß an die Abdichtschenkel (54, 56) von Abdichtkörper-Teilstücken (34), die den über den Verbindungssteg (66) miteinander verbundenen Abdichtschenkeln (54, 56) eines in wenigstens einer benachbarten Wandöffnung (18) angeordneten Abdichtkörper-Teilstückes (34) zugeordnet sind, ein sich mit dem Gehäuserand (12) umlaufend in Eingriff befindendes Abdichtprofil (28) angeformt ist.

7. Leitungsdurchführung nach einem der vorhergehenden Ansprüche, dadurch gekennzeichnet, daß das auf der Aufnahmefläche (14) der Brennkraftmaschine (16) festgelegte Teilstück (26) des Abdichtkörpers (32) mit wenigstens einem weiteren, in eine benachbarte Wandöffnung (18) eingreifenden, gleichfalls auf der Aufnahmefläche (14) festgelegten Teilstück (36) eines Abdichtkörpers (32) über eine Verbindungsleiste (76) verbunden ist.

8. Leitungsdurchführung nach Anspruch 7, dadurch gekennzeichnet, daß die Verbindungsleiste (76) mit dem die Abdichtschenkel (54, 56) der in einander benachbarten Wandöffnungen (18) eingesetzten Abdichtkörper-Teilstücke (34) miteinander verbindenden Verbindungssteg (66) in Eingriff ist.

## Claims

1. A method of passing a pipe duct (22) in sealed manner through a wall opening (18) of a housing (10) coated with lubricant, which housing (10) is sealingly securable by means of a housing edge (12) defining the open housing side on a mounting surface (14) of an internal combustion engine, with a sealing element (32) of elastomeric material sealingly closing the wall opening (18) and having, passing through it, the pipe duct (22) enclosed in the inside of the housing, characterized in that the wall opening (18) extends from the housing edge (12) into the housing wall (20), in that the sealing element (32) is constructed in two parts, being held up by its first part on the mounting surface (14) and being removably in engagement with the wall opening (18) receiving its second part (34), and in that the two mutually applying sealing element parts (34, 36) sealingly enclose the pipe duct (22) between them.

2. A method of passing a duct according to claim 1, characterized in that the side edges (38, 40) of the wall opening (18) converge in a direction opposite the housing edge and merge into an edge part (42) in the shape of an arc of a circle.

3. A method of passing a duct according to claim 2, characterized in that one part of the sealing element is in positive engagement with the two side edges (38, 40) and the other part is in positive engagement with the arc-shaped edge part (42) of the wall opening (18).

4. A method of passing a duct according to claim 1 or claim 2, characterized in that the part (34) of the sealing element (32) inserted into the wall opening (18) and in engagement with the arc-shaped edge part (42) of the latter has two sealing arms (54, 56) which engage, on the one hand, respectively with one side edge (38, 40) of the wall opening and, on the other hand, respectively with one longitudinal groove of the other part (36) of the sealing element (32).

5. A method of passing a duct according to claim 4, characterized in that at least one sealing arm (56) of the sealing element part (34) inserted into the wall opening (18) is connected with one sealing arm (54) of a sealing element part (34) inserted into an adjacent wall opening (18) by means of a connecting web (66) which is in engagement with the housing edge (12) defining the housing opening.

6. A method of passing a duct according to claim 5, characterized in that a sealing profile (28) peripherally in engagement with the housing edge (12) is mounted onto the sealing arms (54, 56) of sealing element part (34) which are associated with the sealing arms (54–56) of a sealing element part (34) placed in at least one adjacent wall opening (18), said second set of sealing arms (54, 56) being joined together by means of the connection web (66).

7. A method of passing a duct according to one of the foregoing claims, characterized in that the part (26) of the sealing element (32) secured on the mounting surface (14) of the internal combustion engine (16) is connected by means of a connection strip (76) with at least one further part (36) of a sealing element (32) engaging into an adjacent wall opening (18) and likewise secured on the mounting surface (14).

8. A method of passing a duct according to claim 7, characterized in that the connection strip (76) is in engagement with the connection web (66) connecting together the sealing arms (54, 56) of the sealing element parts (34) inserted in mutually adjacent wall openings (18).

**Revendications**

1. Passage étanche d'une conduite tubulaire (22) à travers une ouverture de paroi (18) d'un carter (10) sollicité par du lubrifiant, qui peut être fixé de façon étanche par un bord de carter (12) délimitant le côté ouvert de carter sur une surface réceptrice (14) d'un moteur à combustion interne, comportant un corps d'étanchéité (32) en matière élastomère, fermant de façon étanche l'ouverture de paroi (18) et traversé par la conduite tubulaire (22) reliée à l'intérieur du carter, caractérisé en ce que l'ouverture de paroi (18) s'étend à partir du bord de carter (12), vers l'intérieur de la paroi (20) de carter, en ce que le corps d'étanchéité (32) est réalisé en deux parties dont l'une est maintenue perpendiculairement sur la surface réceptrice (14) et est en prise de façon séparable avec l'ouverture de paroi (18) recevant l'autre partie (34) du corps et en ce que les deux parties (34, 36) du corps d'étanchéité, s'appliquant l'une contre l'autre, entourent entre elles de façon étanche la conduite tubulaire (22).

2. Passage de conduite selon la revendication 1, caractérisé en ce que les chants latéraux (38, 40) de l'ouverture de paroi (18) convergent dans un sens opposé au bord de carter (12) et se raccordent à une partie de chant (42) en forme d'arc de cercle.

3. Passage de conduite selon la revendication 2, caractérisé en ce qu'une des parties du corps d'étanchéité est en prise par conjugaison de formes avec les deux chants latéraux (38, 40) et l'autre est liée par conjugaison de formes avec la partie de chant (42) en forme d'arc de cercle de l'ouverture de paroi (18).

4. Passage de conduite selon la revendication 1 ou 2, caractérisé en ce que la partie (34) du corps d'étanchéité (32), engagée dans l'ouverture de paroi (18) et en prise avec sa partie de champ (42) en forme d'arc de cercle, comporte deux branches d'étanchéité (54, 56) qui sont en prise d'un côté avec respectivement un chant latéral (38 ou 40) de l'ouverture de paroi (18) et de l'autre côté avec respectivement une rainure longitudinale de l'autre partie (36) du corps d'étanchéité (32).

5. Passage de conduite selon la revendication 4, caractérisé en ce qu'au moins une branche d'étanchéité (56) de la partie (34) du corps d'étanchéité qui est engagée dans l'ouverture de paroi (19) est reliée à une branche d'étanchéité (54) d'une partie (34) du corps d'étanchéité qui est engagée dans l'ouverture de paroi (18) est reliée à une branche d'étanchéité (54) d'une partie (34) du corps d'étanchéité qui est engagée dans une ouverture adjacente de paroi (18) par l'intermédiaire d'une barrette de liaison (66) en prise avec le bord de carter (12) délimitant l'ouverture du carter.

6. Passage de conduite selon la revendication 5, caractérisé en ce qu'un profil d'étanchéité (28), en prise enveloppante avec le bord (12) du carter, est formé sur les branches d'étanchéité (54, 56) de parties (34) du corps d'étanchéité qui sont associées aux branches d'étanchéité (54, 56), reliées entre elles par l'intermédiaire de la barrette de liaison (66), d'une partie (34) de corps d'étanchéité disposée dans au moins une ouverture adjacente de paroi (18).

7. Passage de conduite selon l'une des revendications précédentes, caractérisé en ce que la partie (26) du corps d'étanchéité (32) qui est fixée sur la surface réceptrice (14) du moteur à combustion interne (16) est reliée, par l'intermédiaire d'une âme de liaison (76), à au moins une autre partie (36) d'un corps d'étanchéité (32), engagée dans une ouverture adjacente de paroi (18) et fixée également sur la surface réceptrice (14).

8. Passage de conduite selon la revendication 7, caractérisé en ce que l'âme de liaison (76) est en prise avec la barrette de liaison (66) reliant les branches d'étanchéité (54, 56) des parties (34) de corps d'étanchéité qui sont engagées dans des ouvertures de paroi (18) mutuellement adjacentes.

EP 0 313 751 B1

*Fig.1*

*Fig.2*

*Fig.3*

*Fig.4*

EP 0 313 751 B1

Fig.5